# EUROPEAN PATENT APPLICATION

(11) **EP 4 763 384 A1**
(43) Date of publication of application: **24.06.2026**
(21) Application number: 24222300.6
(22) Date of filing: 20.12.2024
(51) Int. Cl.: B23B 27/00, B23B 29/12, B23Q 17/09, B23B 25/06, B23B 29/08

(54) **TURNING TOOL WITH SENSOR MODULE**

(71) Applicant: AB Sandvik Coromant, 811 81 Sandviken (SE)
(72) Inventor: JENSEN, Tormod, 811 81 SANDVIKEN (SE); VEDELD, Roger, 811 81 SANDVIKEN (SE); OTTESEN, Einar, 811 81 SANDVIKEN (SE)
(74) Representative: Sandvik

(57) **Abstract**

The invention relates to a turning tool (1) for machining a metal workpiece (20), wherein the turning tool comprises a tool body (10) including an outer peripheral surface (2), a front end (3), a rear end (4), and a longitudinal axis (C) extending from the front end (3) to the rear end (4). The turning tool (1) further comprises a sensor module (100) including at least one sensor (5, 15) for measuring a machining parameter. The sensor module (100) is mounted on a mounting surface portion (M) of the outer peripheral surface (2) of the tool body (10) such that the sensor module (100) extends radially outward from the mounting surface portion (M) in one or more radial directions with respect to the longitudinal axis (C). The sensor module (100) comprises a housing including one or more laterally facing outer side wall portions (7) made of a first material and a forwardly facing outer front wall portion (13) made of a second material, wherein the second material is more wear resistant than the first material.

## Description

### TECHNICAL FIELD

The invention relates to metal cutting, and in particular to turning operations wherein a turning tool is used for machining a rotating metal workpiece.

### BACKGROUND ART

Within the field of metal cutting, a turning tool may be used for machining the surface of a rotating metal workpiece. A cutting insert, for example made of cemented carbide or some other wear resistant material, is commonly arranged at the front of such turning tool.

To optimize the cutting process, sensors may be used for measuring parameters during machining, and such measurements may be taken into consideration for adjusting the cutting process (in real-time or in subsequent machining operations) and/or to evaluate the machining results. There are some examples in the prior art where such sensors have been arranged at the tool body of a turning tool. Arranging sensors at the tool body may be beneficial for accurately measuring various parameters that may affect the machining results, such as deflection or vibrations of the turning tool. For example, the magnitude of such parameters may indicate different states, such as defects of the turning tool or the cutting insert, or other problems related to the cutting process. The sensors, and any related electronic components that are required, are usually integrated within, and to some extent hidden inside, the tool body of the turning tool. For example, EP4331751 discloses a turning tool with recesses formed in the tool body for accommodating sensors, power supply and other electronic components, wherein lids cover the recesses to protect the components. Such configuration may seem advantageous since it would not significantly change the appearance and external profile of the tool body and may also limit the exposure of sensitive electronic components to the machining environment. On the other hand, recesses within the tool body for accommodating sensors and electronics may reduce the strength of the tool body and thus, for example, its ability to withstand bending forces.

Accordingly, there is a need for improved sensor equipped turning tools that are strong and robust and have similar machining abilities as corresponding turning tools without sensors.

### SUMMARY

It is an object of the present invention to mitigate the shortcomings of the prior art and to provide a turning tool including one or more sensors for measuring one or more machining parameters, wherein the turning tool is robust, strong, and able to withstand the stress caused by a rough machining environment. Another objective is to provide such turning tool that is easy to manufacture in a cost-effective way.

Thus, according to a first aspect, the invention relates to a turning tool for machining a metal workpiece, wherein the turning tool comprises a tool body including an outer peripheral surface, a front end, a rear end, and a longitudinal axis extending from the front end to the rear end. The turning tool further comprises a sensor module including at least one sensor for measuring a machining parameter. The sensor module is mounted on a mounting surface portion of the outer peripheral surface of the tool body such that the sensor module extends radially outward from the mounting surface portion in one or more radial directions with respect to the longitudinal axis. The sensor module comprises a housing including one or more laterally facing outer side wall portions made of a first material and a forwardly facing outer front wall portion made of a second material, wherein the second material is more wear resistant than the first material.

The inventors have found that a sensor module arranged at the exterior of a turning tool body, in contrast to inside a recess formed in the tool body, will limit any negative impact on the strength of the turning tool caused by the presence of the sensors and related electronics.

Moreover, the inventors have found that such sensor module requires less, if any, modifications of the turning tool body, and a robust sensor equipped turning tool may therefore be obtained without significant adaptations of a conventional turning tool body used for the same application. Moreover, the use of a single sensor module in which all the required sensors and electronics are placed will not require any wires or connectors through the interface to the CNC machine at which the turning tool is mounted, thereby facilitating use, manufacturing, and service of a turning tool including such sensor module. The inventors have found that, for many turning operations, an outer front wall portion of a housing of a sensor module arranged at the tool body is much more exposed to chips cut from the workpiece. Sometimes, a significant amount of the chips that have been cut will travel at high speed towards, and directly hit, such front wall portion of the sensor module housing. Based on this, the inventors have found that a front wall portion of the sensor module housing should be made of a material that is more wear resistant than the material used for other parts of the module housing, even though such wear resistant material may be less suitable in view of other aspects, such as manufacturability and/or corrosion resistance. The first material may be the main material of the sensor module housing, i.e., the material of which most portions of the housing are made, and this is preferably a material that is relatively cheap and easy to form into a desired shape (e.g., by machining or casting), thereby reducing the cost of the sensor module.

In other words, it has been found that an optimal compromise between different parameters, such as manufacturability, cost, corrosion resistance and wear resistance, is obtained by using different materials for different parts of the sensor module housing, and more specifically by using a material for an outer front wall portion of the housing that is more wear resistant than the material used for other parts of the housing.

The housing is an exterior housing of the sensor module, i.e., forming an outer border of the sensor module, both in an axial forward direction and in one or more radial directions with respect to the longitudinal axis of the tool body. In other words, for a cross-section through the sensor module perpendicular to the longitudinal axis, a radially outermost point of the sensor module would normally be a point on a laterally facing outer side wall portion, and, for a cross-section through the sensor module in a plane parallel with the longitudinal axis, an axially forwardmost point of the sensor module would normally be a point on the forwardly facing outer front wall portion.

The outer front wall portion of the sensor module housing may be formed by a wear resistant plate mounted on top of a front section of a housing made of the first material. Hence, a front section of the housing may include both a portion made of the first material and another portion made of the second material and located in front of the portion made of the first material, thus forming the outer front wall portion of the housing.

The sensor module may comprise a plurality of sensors for measuring different machining parameters. Sensor signals obtained from a plurality of sensors may also be jointly used for determining a machining parameter. A machining parameter should be understood as a parameter characterizing a machining process (or the results of a machining process). For example, a machining parameter may relate to cutting force, deflection, or vibration of the turning tool, measured in one or more different directions, such as in a radial direction or in a tangential direction (with respect to the workpiece being machined). Such parameters may be used to estimate other parameters characterizing the results of the machining process, such as geometry and/or roughness of the machined surface. Another example of a machining parameter is temperature.

The sensor module may include various other components, such as processing circuitry, power supply (e.g., a battery) and a transmitter for transmitting sensor signals, and one or more circuit boards on which sensors and components may be arranged.

The front end of the turning tool body may include a cutting insert or an insert seat in which a cutting insert can be arranged. Alternatively, the front end of the turning tool body may include an interface at which a cutting head is arrangeable, wherein such cutting head may include a cutting insert or a seat in which a cutting insert can be arranged.

The rear end of the turning tool body may include a coupling portion that is arrangeable to a machine tool, for example via a tool holder. The machine tool may be a CNC lathe or some other machine tool useable for turning operations.

The mounting surface portion may be located at the outer peripheral surface of the tool body at a position somewhere between the rear end and the front end. According to some embodiments, the mounting surface portion does not extend all the way forward to the front end or all the way rearward to the rear end. Hence, the sensor module may be spaced at least some distance from the front end and from the rear end, which may be beneficial for practical reasons (such as to not obstruct tool change, for example), and may be suitable in view of placement of different kinds of sensors or combination of sensors. Accordingly, the mounting surface portion and the sensor module may be located along the longitudinal axis in front of a coupling portion of the tool body and behind a cutting insert (or a seat therefor) or a cutting head (or an interface at which such cutting head is arrangeable) at the front of the tool body.

According to some embodiments, the mounting surface portion and the sensor module may be located in a region close to a middle (in the longitudinal direction) of the tool body between the front end and the rear end.

Also, the mounting surface portion and the sensor module may have a longitudinal extension (extension along the longitudinal axis of the tool body) that is relatively large in relation to the total longitudinal extension of the tool body. For example, according to some embodiments, the longitudinal extension of the mounting surface portion and the sensor module may correspond to at least 20% of the longitudinal extension of the tool body. The longitudinal extension of the tool body corresponds to the distance, along the longitudinal axis, from the front end to the rear end.

Accordingly, a first part of the mounting surface portion and the sensor module may be located on a rear half of the tool body, and a second part of the mounting surface portion and the sensor module may be located on a front half of the tool body.

A placement of the sensor module such that the sensor module is spaced from both the front end and from the rear end, but not too far from the front end or from the rear end, may provide for the possibility to place a first sensor (for example an accelerometer for measuring vibrations) at a position that is spaced from, but relatively close to, the front end, and place one or more second sensors (e.g., strain gauges for measuring force and/or deflection) at a position that is spaced from, but relatively close to, the rear end. This may result in a sensor module with multiple sensors providing accurate measurements of different machining parameters.

A laterally facing outer side wall portion of the sensor module housing may be located in a plane parallel with the longitudinal axis. In other words, a normal to an outer side wall portion may extend in parallel to a radial direction with respect to the longitudinal axis. However, it is also envisaged that the outer side wall portions are oriented differently, and they are not necessarily completely flat. In this context, "laterally facing" should be understood as that a normal to such outer side wall portion has a greater component in a radial direction than in an axial direction with respect to the longitudinal axis.

Correspondingly, a forwardly facing outer front wall portion of the sensor module housing may be located in a plane perpendicular to the longitudinal axis. In other words, a normal to the outer front wall portion may extend in parallel to the longitudinal axis. However, it is also envisaged that the outer front wall portion is oriented differently, and it is not necessarily completely flat. In this context, "forwardly facing" should be understood as that a normal to such outer front wall portion has a greater component in an axial direction than in a radial direction with respect to the longitudinal axis.

The forwardly facing outer front wall portion may cover a majority of the parts of the sensor module facing forward. According to some embodiments, the forwardly facing outer front wall portion covers all, or substantially all, parts of the sensor module facing forward. Thereby, the sensor module is well protected from chips generated during a machining operation. "Substantially all parts" in this context should be understood as all parts except certain features, e.g., screw holes, required for mounting the front wall portion to the sensor module.

The sensor module extends radially outward from the mounting surface portion of the outer peripheral surface of the tool body. In other words, the sensor module, and particularly the laterally facing outer wall portions of the sensor module housing, are, in comparison to the mounting surface portion, located at a greater radial distance from the longitudinal axis. However, the peripheral surface of the tool body may include portions that are located at a greater radial distance from the longitudinal axis than the mounting surface portion. Such portions of the peripheral surface of the tool body may for example be located on parts of a coupling portion behind the sensor module and such parts may have a radial outward extension in one or more radial directions that is as great as, or even greater than, the radial outward extension of the sensor module in corresponding radial directions. Hence, the sensor module does not necessarily extend radially outward beyond *any* portion of the tool body. However, the radial outward extension of the sensor module in one or more radial directions, and for example in any radial direction, may be greater than a corresponding radial outward extension of portions of the tool body located in front of the sensor module. Moreover, according to some embodiments, the radial outward extension of the sensor module in at least one radial direction may be greater than a maximum radial outward extension of the tool body.

The feature that the second material is more wear resistant than the first material should be understood as that the second material has a greater ability to withstand wear, and in particular erosion wear, for example caused by impacts from particles (e.g., chips) hitting the surface, and abrasive wear, for example caused by particles sliding against the surface.

According to some embodiments, the second material is harder than the first material, for example as measured according to the Rockwell scale or Brinell scale.

According to some embodiments, the first material has, compared to the second material, a higher machinability.

Accordingly, the first material may be easier, and therefore cheaper, to manufacture to the desired shape. For example, the first material may be softer than the second material. According to some embodiments, when manufacturing the sensor module, a sensor module housing, including a forwardly facing portion, is made of the first material. Thereafter, a plate of the second material is mounted on the front of the sensor module housing, such as to form the forwardly facing outer front wall portion of the second material.

According to some embodiments, the first material is, compared to the second material, more corrosion resistant. Liquids for cooling and flushing are often used in turning operations, and these liquids may increase problems caused by corrosion. If using a first material that is more corrosion resistant than the second material, the overall wear resistance of the sensor module is further increased since the corrosive wear is reduced. The risk of corrosive wear, and the adverse effects thereof, may be greatest at interfaces between outer side wall portions of the first material and other portions of the sensor module housing made of other materials, such as, for example, a window portion made of plastic. Therefore, if using a corrosion resistant material for these outer side wall portions, the overall wear resistance of the sensor module housing is greatly improved. The corrosive wear resistance may be particularly good if also an inner front wall portion of the sensor module is made of the first material and the outer front wall portion of the second material is applied on top of the inner front wall portion.

According to some embodiments, the first material is aluminum or an aluminum alloy. Aluminum may be suitable from a cost- and machinability perspective. It is also more corrosion resistant than many other metals, such as steel.

According to other embodiments, the first material is a non-metallic material, such as a plastic or other materials based on polymers. Some plastics may have a sufficient strength to be used at least for some parts of the sensor module housing.

According to some embodiments, the second material is steel or alloy steel. Steel, although being rather difficult to machine, is a relatively cheap material that is hard and has very good wear resistance, in particular resistance to erosion wear and abrasive wear. According to other embodiments, the second material is titanium or a titanium alloy which is also resistant to wear.

The mounting surface portion may extend all around the circumference of the outer peripheral surface of the tool body, and thus the sensor module may circumferentially enclose the tool body at the mounting surface portion.

Accordingly, laterally facing outer side wall portions may extend all around the circumference of the sensor module. The sensor module may be square, or substantially square, in a cross section perpendicular to the longitudinal axis of the tool body, and the sensor module housing may thus include a plurality of flat outer side wall portions that together form the main part of the laterally facing outer side wall portions. All such flat outer side wall portions may be made of the first material. The sensor housing may include additional outer side wall portions made of the first material, for example bent or rounded portions connecting the flat outer side wall portions.

The sensor housing may also include other laterally facing side wall portions made of a different material. For example, the housing may include a window for allowing transmittal of signals from a transmitter arranged in the sensor module. Hence, according to some embodiments, the sensor module comprises a transmitter including an antenna for wireless transmission of sensor signals, wherein the sensor module housing comprises a window portion located radially outwards of the antenna such that sensor signals may be transmitted through the window portion. The window portion may be made of a non-metallic material, in particular a non-metallic material through which radio signals can be easily transmitted. To function properly, and to fulfill certain regulatory requirements on radio gain, a transmitter for wireless transmission of signals may have to be spaced a certain distance from metal. A window portion made of a non-metallic material may therefore be particularly useful if adjacent parts of the laterally facing outer side wall portions of the sensor housing are made of aluminum or some other metallic material. For example, the window portion may be made of plastic. The size (area) of the window portion may be selected such that signals can be easily transmitted, which may depend on the wavelength used for the transmission.

According to some embodiments, the outer peripheral surface of the tool body has a circular shape in a cross-section perpendicular to the longitudinal axis at the mounting surface portion. For example, such cross-sectional shape may be circular in cross-sections along a major part of the longitudinal extension of the mounting surface portion, and for example circular in *any* cross-section perpendicular to the longitudinal axis at the mounting surface portion. A radially innermost part of the sensor module, and in particular an inner surface thereof that is arranged against the mounting surface portion, may also have a circular cross-sectional shape complementary to the shape of the mounting surface portion, such as to facilitate secure mounting (for example by glue) of the sensor module at the mounting surface portion of the outer peripheral surface of the tool body.

The sensor module may include a frame structure that is connected to at least a part of the mounting surface portion of the outer peripheral surface of the tool body. Accordingly, such frame structure may have an innermost surface with a shape that is complementary to the shape of the corresponding parts of the mounting surface portion, such that the frame structure can be securely connected and mounted to at least a part of the mounting surface portion. The frame structure may hold other components of the sensor module, such as one or more circuit boards on which one or more sensors and/or other electronic components, such as processing circuitry and a transmitter, are mounted.

The frame structure may be made of a non-metallic material, such as a plastic that is rigid enough to provide a sufficiently strong sensor module. A non-metallic frame structure has the additional benefit of providing a certain distance between the tool body (made of metal) and a transmitter arranged in the sensor module for wireless transmission of sensor signals, which, as discussed previously, may be beneficial or even required depending on the characteristics of the transmitter.

A frame structure on which other components of the sensor module are arranged is beneficial from a manufacturing point of view since various components, such as circuit boards and other electronic components, would not have to be mounted directly onto the mounting surface portion of the tool body. The frame structure may have radially outermost surfaces that are flat. This may facilitate mounting of circuit boards and/or other components of the sensor module. It is also envisaged, though, that some components of the sensor module, for example a sensor for measuring a machining parameter, is mounted directly onto a part of the mounting surface portion of the tool body, and for example connected via cables to processing circuitry arranged on a circuit board mounted on the frame structure.

### BRIEF DESCRIPTION OF DRAWINGS

The solution will now be described in more detail by means of exemplary embodiments and with reference to the accompanying drawings, in which:
Fig. 1 illustrates a tool body of a turning tool according to an embodiment.
Fig. 2 illustrates a turning tool according to an embodiment including the tool body illustrated in Fig. 1 and a sensor module.
Fig. 3 is another view of the turning tool.
Fig. 4 illustrates the turning tool with the housing of the sensor module removed, showing components inside the sensor module.
Fig. 5 illustrates a turning tool according to an embodiment when machining a workpiece.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

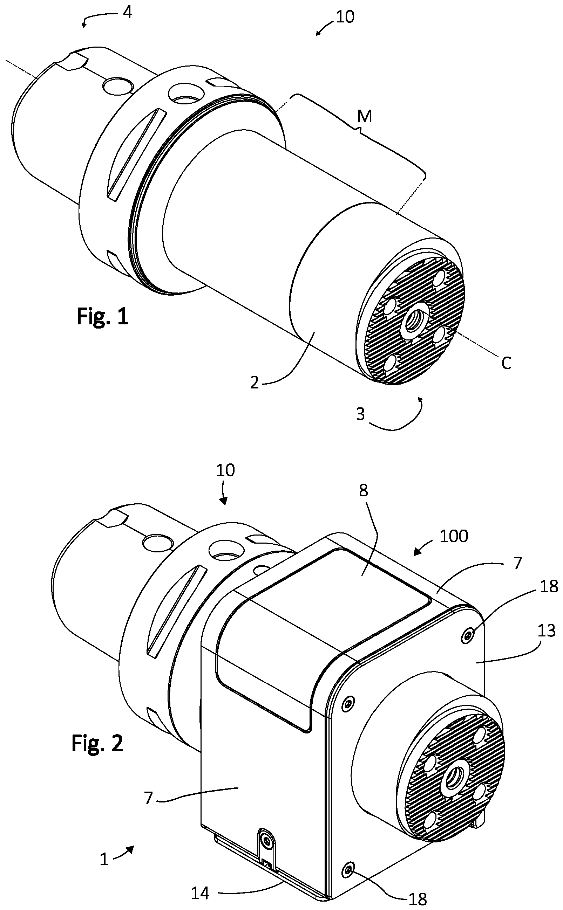

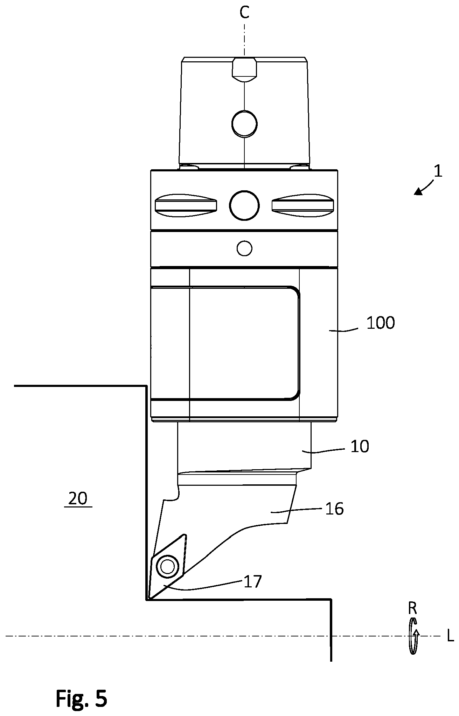

Fig. 1 illustrates a tool body 10 of a turning tool 1 according to an embodiment. The tool body 10 may correspond to a conventional tool body of a turning tool. The tool body 10 may also include small adaptations (not illustrated) for facilitating mounting of a sensor module 100 and components thereof on the tool body 10. Such adaptations could for example be screw holes. The tool body 10 includes an outer peripheral surface 2, a front end 3, and a rear end 4. The tool body extends longitudinally along a longitudinal axis C from the front end 3 to the rear end 4. The front end 3 includes an interface comprising a serrated surface at which a cutting head 16 (schematically illustrated in Fig. 5) is mountable. As seen in Fig. 1, in this embodiment the interface at the front end 3 is not symmetrically arranged with respect to the longitudinal axis C, meaning that a cutting head 16 will be excentrically arranged at the front end 3 of the tool body. The rear end 4 includes a coupling portion arrangeable to a machine tool. In the illustrated embodiment, the coupling portion is a quick-change coupling which in the industry is known as Coromant Capto^{®}.

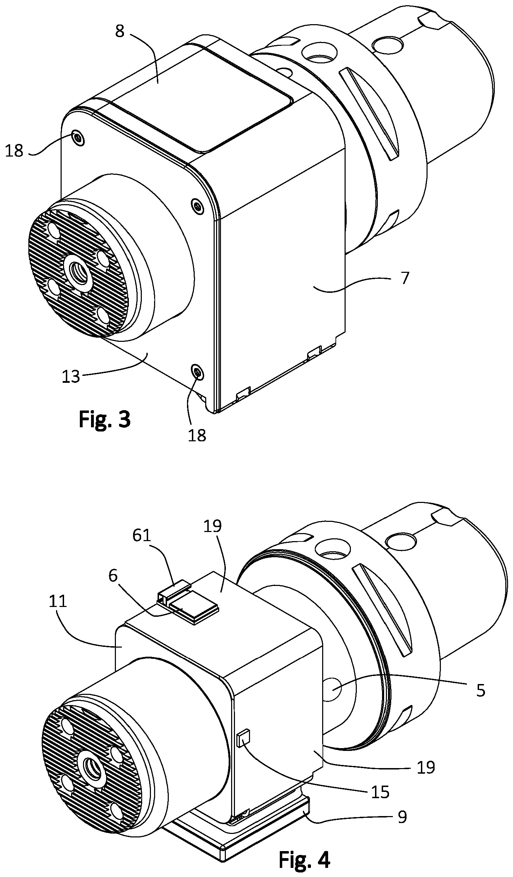

The outer peripheral surface 2 includes a mounting surface portion M, extending circumferentially all around the tool body 10. The mounting surface portion M corresponds to the portion of the outer peripheral surface 2 on which a sensor module 100 is mounted, which is illustrated in Fig. 2. The sensor module 100 has a sensor module housing comprising a plurality of laterally facing outer side wall portions 7. In the illustrated embodiment, the outer side wall portions 7 are made of aluminum. The sensor housing also includes a lid 14 to a battery compartment. The sensor housing also includes a window portion 8. In the illustrated embodiment, the window portion 8 is made of plastic. The size and location of the window portion is selected such that wireless transmission of sensor signals can be transmitted through the window from an antenna 61 of a transmitter 6 (illustrated in Fig. 4).

The sensor housing further includes a forwardly facing outer front wall portion 13 covering other parts of the sensor module that face a forward direction. The outer front wall portion 13 is the part of the sensor module that is most exposed to damage from chips being cut during a machining process. The outer front wall portion 13 is therefore made of a material that is more wear resistant than the material from which the outer side wall portions 7 are made of. In the illustrated embodiment, the outer front wall portion 13 is made of steel and is fixed with screws 18 to an inner front portion (not visible in the drawings) of the housing that in this case is made of aluminum and is integrally formed or connected with the laterally facing outer side wall portions 7.

Figure 4 illustrates the tool body and the sensor module with the housing removed, exposing some of the components in the sensor module 100. The sensor module comprises a frame structure 11, in this case made of plastic, that is connected to a part of the mounting surface portion M and fixed thereto using an adhesive. Circuit boards 19 are mounted on the frame structure 11. As seen in Fig. 4, the frame structure 1 does not cover all the mounting surface portion M. On a rear part of the mounting surface portion M, axially behind the frame structure 11, a sensor 5 is mounted on the outer peripheral surface 2 of the tool body 10. In the illustrated embodiment, the sensor 5 is a strain gauge, only schematically illustrated, for measuring cutting forces and/or bending of the tool body when machining. Such strain gauges may be arranged at multiple positions around the circumference of the tool body, for example at four equally spaced positions around the circumference. The sensor module 100 includes an additional sensor 15 arranged at the circuit board 19. In this exemplary embodiment, the sensor 15 is an accelerometer that can be used for measuring vibrations during a machining operation. The sensor module 100 also includes a transmitter 6 on the circuit board 19 for wireless transmission of sensor signals via an antenna 61. The transmitter is located on a side of the circuit board in a position such as to maximize the spacing of the transmitter 6 and the antenna 61 from metal, and more precisely from the tool body 10 and from the metallic parts of the sensor module housing (i.e., all parts except the window portion 8).

As also illustrated in Fig. 4, the sensor module further includes a battery 9 in a battery compartment located behind the lid 14.

The sensor module may include other components not illustrated in Fig. 4, for example components arranged on the circuit boards 19, such as processing circuitry and leads for conveying signals within the sensor module.

Fig. 5 illustrates the turning tool 1 in a machining operation wherein the turning tool is arranged to a machine tool (not shown) and cutting a workpiece 20 that rotates in a rotation direction R around a rotation axis L. The turning tool 1 includes the tool body 10, the sensor module 100 and a cutting head 16 arranged at the front end 3 of the tool body 10. The cutting head 16 comprises a cutting insert 17 engaged in cutting action with the workpiece 20. Some of the chips formed in the cutting process are likely to hit the outer front wall portion 13 of the sensor module housing, whereas relatively few chips are likely to reach and damage the outer side wall portions 7 of the sensor module housing.

## Claims

1. A turning tool (1) for machining a metal workpiece (20), wherein the turning tool comprises a tool body (10) including an outer peripheral surface (2), a front end (3), a rear end (4), and a longitudinal axis (C) extending from the front end (3) to the rear end (4), and wherein the turning tool (1) further comprises a sensor module (100) including at least one sensor (5, 15) for measuring a machining parameter, **characterized in that** the sensor module (100) is mounted on a mounting surface portion (M) of the outer peripheral surface (2) of the tool body (10) such that the sensor module (100) extends radially outward from the mounting surface portion (M) in one or more radial directions with respect to the longitudinal axis (C), and wherein the sensor module (100) comprises a housing including one or more laterally facing outer side wall portions (7) made of a first material and a forwardly facing outer front wall portion (13) made of a second material, wherein the second material is more wear resistant than the first material.

2. A turning tool according to any of the previous claims, wherein the first material has, compared to the second material, a higher machinability.

3. A turning tool according to any of the previous claims, wherein the first material is, compared to the second material, more corrosion resistant.

4. A turning tool according to any of the previous claims, wherein the first material is aluminum or an aluminum alloy.

5. A turning tool according to any of the claims 1-3, wherein the first material is a non-metallic material.

6. A turning tool according to any of the previous claims, wherein the second material is steel or alloy steel.

7. A turning tool according to any of the claims 1-5, wherein the second material is titanium or a titanium alloy.

8. A turning tool according to any of the previous claims, wherein the mounting surface portion (M) extends all around the circumference of the outer peripheral surface (2) of the tool body (10), and wherein the sensor module (100), at the mounting surface portion (M), circumferentially encloses the tool body (10).

9. A turning tool according to any of the previous claims, wherein the sensor module comprises a transmitter (6) including an antenna (61) for wireless transmission of sensor signals, and wherein the housing comprises a window portion (8) located radially outwards of the antenna such that sensor signals may be transmitted through the window portion.

10. A turning tool according to claim 9, wherein the window portion (8) is made of a non-metallic material.

11. A turning tool according to any of the previous claims, wherein the outer peripheral surface (2) of the tool body (10), in a cross-section perpendicular to the longitudinal axis (C) at the mounting surface portion (M), has a circular shape.

12. A turning tool according to any of the previous claims, wherein the sensor module includes a frame structure (11) connected to at least a part of the mounting surface portion (M) of the outer peripheral surface (2) of the tool body (10).

13. A turning tool according to claim 12, wherein the frame structure (11) is made of a non-metallic material.
